# EUROPEAN PATENT APPLICATION

(11) **EP 2 876 592 A1**
(43) Date of publication of application: **27.05.2015**
(21) Application number: 13306588.8
(22) Date of filing: 21.11.2013
(51) Int. Cl.: G06Q 20/20, G07F 7/08

(54) **Method to operate a contactless mobile device as a low cost secured point-of-sale**

(71) Applicant: Gemalto SA, 92190 Meudon (FR)
(72) Inventor: Chene, Gilles, 13705 La Ciotat (FR)

(57) **Abstract**

The present invention relates to a method to operate a contactless mobile device as a low cost secured point-of-sale (POS), hereinafter POS device (POS_D), said POS device (POS_D) having a non-secured operating system (OS), a POS application (POS_A) installed in said non-secured operating system (OS), an embedded secure element (eSE), a transaction proxy applet (Pxy_A) installed in said embedded secure element (eSE) and a Contactless Front-End (CLF) to contactless communicate with a customer mobile device (C_D) having a secured transaction dedicated application (TDA).

## Description

### FIELD OF THE INVENTION

The invention concerns online payment in eCommerce use case, using user smartphone. More precisely, the invention concerns payment in physical store using a mobile device as a POS. The present invention relates to a method to operate a contactless mobile device as a low cost secured point-of-sale. The invention also pertains to a device implementing said method.

### BACKGROUND OF THE INVENTION

Point-of-sales are currently implemented in handsets having the relevant specification to comply with huge and costly certifications: EMV, PCI PTS...

There is a need for enlarging the operation scope of any mobile device to point-of-sale function. While using a mobile device as a point-of-sale to perform a transaction, a transaction server is involved as an acceptor and payment processor. There is today a need for easy point-of-sales able to reach such a transaction server in the cloud.

Mobile devices could be good candidates to implement such point-of-sales. However tablets, smartphones and any mobile device having comparable operating systems are recognized as not secure enough to host full payment application software.

When transactions are processed by applications in such mobile devices, the security is weak and risks are not acceptable for banking transactions.

Further alternative and advantageous solutions would, accordingly, be desirable in the art.

### SUMMARY OF THE INVENTION

The present invention aims at proposing a secure solution to deploy low cost secured mobile point-of-sale (POS).

The present invention thus concerns to operate a contactless mobile device as a low cost secured point-of-sale, hereinafter POS device, said POS device having a non-secured operating system, a POS application installed in said non-secured operating system, an embedded secure element, a transaction proxy applet installed in said embedded secure element and a Contactless Front-End (CLF) to contactless communicate with a customer mobile device having a secured transaction dedicated application, said method comprising the steps of:
- for the POS application, initiating a link with a transaction server,
- for the POS application, forwarding to the embedded secure element requests from said transaction server for a secure channel to be opened between the transaction server and said embedded secure element,
- for said transaction proxy applet, establishing a secure channel with the transaction server,
- once the secure channel is established between the transaction server and the secure element, requesting the switching of the CLF into a secure element reader mode,
- for said transaction proxy applet, decrypting encrypted commands received from transaction server in the secure channel, forwarding commands in clear through CLF to said secured transaction dedicated application located in the customer device.
- for said transaction proxy applet, encrypting commands received in clear through CLF from said secured transaction dedicated application in the customer device, forwarding encrypted commands to transaction server in the secure channel,
- once the transaction is processed, closing the secure channel and switching the CLF back to normal reader mode.

While providing a secure channel to bypass the most sensitive part, which is the point-of-sale device, the invention provides an end-to-end security. It ensures a correct security level in the banking transactions, despite the not secured smartphone software platform.

The invention enables transaction operations to be done directly in the cloud in a secure way which is very advantageous. Indeed, even in such a cloud open situation, the invention enables to provide end to end security as required from the banking application in the UICC of the customer device and from the transaction server. It is here noted that terms "customer device" refers to any entity able to implement a secured transaction application. It can be as well a mobile phone, a contactless banking card or any other electronic support adapted to communicate with a POS device of the invention through NFC protocol.

The invention also concerns a mobile device able to be operated as a low cost secured point-of-sale, hereinafter POS device, said POS device having a non-secured operating system, a POS application installed in said non-secured operating system, an embedded secure element, a transaction proxy applet installed in said embedded secure element and a Contactless Front-End (CLF) to contactless communicate with a customer mobile device having a secured transaction dedicated application, said POS application being dedicated to initiate a link with a transaction server, forward to the embedded secure element requests from said transaction server for a secure channel to be opened between the transaction server and said embedded secure element, said CLF being able to be switched into a secure element reader mode once a secure channel is established between the transaction server and the embedded secure element, said transaction proxy applet being able to establish a secure channel with the transaction server, to decrypt encrypted commands received from transaction server in the secure channel, to forward commands in clear through CLF to said secured transaction dedicated application in the customer device, to encrypt commands received in clear through CLF from said secured transaction dedicated application in the customer device, to forward encrypted commands to transaction server in the secure channel.

Such a mobile device constitutes a secured point-of-sale able to perform secured transaction in communication with, on one side, a transaction server and, on the other side, a customer contactless device.

To the accomplishment of the foregoing and related ends, one embodiment comprises the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. In the drawings:
Figure 1 represents a mobile device operated as a point-of-sale according to the invention and the environment in which the invention applies;
Figure 2 is a schematic diagram of the method of the invention.

### DETAILED DESCRIPTION OF EMBODIMENTS OF THE INVENTION

For clarity, only those elements and steps which are useful to the understanding of the present invention have been shown in the drawings and will be described.

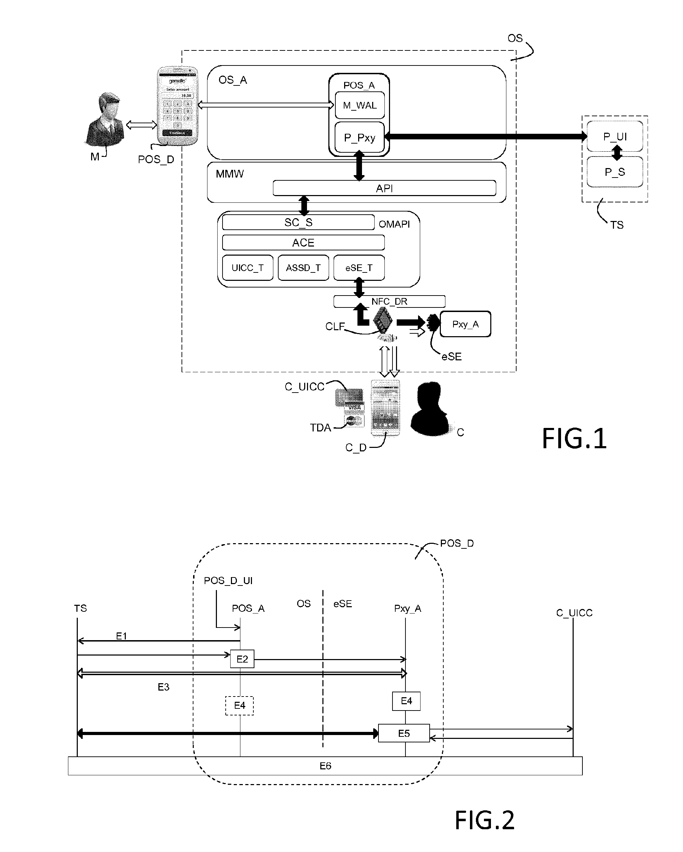

FIG. 1 schematically shows a device POS_D of the type to which the present invention is applied in order for it to be operated as a low cost secured point-of-sale. This device can be a tablet, a smartphone or any other device as soon as it is provided with a non-secured operating system OS, an embedded secure element eSE and a Contactless Front-End CLF to contactless communicate with a customer mobile device C_D. The operating system OS_A is typically an Android type. It comprises classically applications OS_A and a mobile middle-ware MMW interfacing API with an Open Mobile Application Processor Interface OMAPI. This OMAPI typically includes a smartcard service SC_S, an access control enforcer ACE and several terminals UICC_T, ASSD_T and eSE_T able to cooperate with drivers in order to establish communication with different elements like SIM card, memory card and so on.

For the aim of the invention, the secure element terminal eSE_T has to be able to communicate with the secure element eSE via an NFC_driver NFC_DR and the CLF. Also, a POS application POS_A has to be preliminary installed in the non-secured operating system OS_A. This POS application comprises typically a merchant wallet M_W associated with a payment proxy P_Pxy. This payment proxy enables the POS application POS_A to communicate, on one side, with a transaction server TS and, on the other side, with the mobile middleware MMW inside the operating system OS.

Besides a transaction proxy applet Pxy_A has also to be installed in said embedded secure element eSE.

The POS device POS_D is interacting with a transaction server TS and with a customer device C_D. The transaction server TS comprises a payment user interface P_UI and contactless payment services P_S. The customer device C_D comprises an UICC C_UICC with an installed secured transaction dedicated application TDA. Such a transaction dedicated application TDA is typically an EMV or Magstripe application. The customer device C_D is a tablet or a smartphone.

The proxy applet Pxy_A installed in the embedded secure element eSE is storing private keys to be used to establish a secure channel with the transaction server TS. It is also dedicated to manage such a secure channel that is represented by plain black arrows on figure 1.

The eSE proxy applet Pxy_A is also dedicated to manage commands with the EMV application TDA installed in the C_UICC of the customer smartphone C_D. This time commands are manages in clear according to the invention. Data are thus in clear on NFC radio interface and on Single Wire Protocol line when exchanged from/to the CLF antenna. Indeed the invention exploits the fact that it is very difficult to hack the CLF firmware.

Besides with the invention, data are encrypted in the secure channel on Single Wire Protocol line and out of the CLF in the upper layer of drivers and operating system of the POS device to the transaction server TS itself.

For the purpose of the invention and for the management of data circulating in the secure channel, the proxy applet Pxy_A also has encryption/decryption means to ensure decryption of commands received from the transaction server in the secure channel. Then, the commands in clear, typically APDUs but it can be other commands as well, are provided to the CLF, typically on a Single Wire Protocol line. The CLF will thus route these APDUs to the EMV applet in C_UICC of the customer device C_D using NFC facilities of the two devices.

In the other direction, response from EMV application in the customer device C_D will be retrieved through NFC by the CLF, and transmitted to the eSE proxy applet Pxy_A for encryption and exchange in secure way via the secure channel to the transaction server.

Figure 2 discloses schematically the operation of a mobile device POS_D as a point-of-sale according to the invention. In the operating system OS of the device POS_Dn a POS application POS_A is installed. It receives information for a transaction to be processed from a POS device user interface POS_D_UI. It triggers the initialisation of a link with a transaction server TS in a first step E1. Then this POS application POS_A forwards requests from the transaction server TS for a secure channel to be established in a step E2 to a proxy applet Pxy_A installed in an embedded secure element eSE in the POS device POS_D. This proxy applet Pxy_A establishes a secure channel with the transaction server TS in a step E3. Once the secure channel is established, in a step E4, the CLF is switched in a secure element reader mode. This step can be controlled by the proxy applet or by the POS application, the last option being shown with a dashed square on figure 2.

Then, in a step E5, the proxy applet Pxy_A, on one side, decrypts encrypted commands received from transaction server in the secure channel, forwards commands in clear through CLF to said secured transaction dedicated application in the C_UICC of the customer device, and on the other side, encrypts commands received in clear through CLF from said secured transaction dedicated application in the C_UICC of the customer device and forwards encrypted commands to transaction server in the secure channel. To simplify the drawing, step E5 is schematically represented with a single box on figure 2. This step gathers the communication steps enabling the transaction to be performed. On one side, communications are encrypted and, on the other side, they are in clear. In the middle, step E5 represents the encryption/decryption operations done securely inside the eSE.

At last, in a step E6, once the transaction was processed using the transaction secure channel and the communication in clear between proxy applet Pxy_A and C_UICC of the customer device, CLF is again switched to the normal reader mode and the secure channel is closed. In normal reader mode, the eSE terminal eSE_T and the NFC driver NFC_DR are intended to read NFC tags presented in the vicinity of the CLF.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

## Claims

1. Method to operate a contactless mobile device as a low cost secured point-of-sale (POS), hereinafter POS device (POS_D), said POS device (POS_D) having a non-secured operating system (OS), a POS application (POS_A) installed in said non-secured operating system (OS), an embedded secure element (eSE), a transaction proxy applet (Pxy_A) installed in said embedded secure element (eSE) and a Contactless Front-End (CLF) to contactless communicate with a customer mobile device (C_D) having a secured transaction dedicated application (TDA), said method comprising the steps of:
- for the POS application (POS_A), initiating (E1) a link with a transaction server (TS),
- for the POS application (POS_A), forwarding (E2) to the embedded secure element (eSE) requests from said transaction server (TS) for a secure channel to be opened between the transaction server (TS) and said embedded secure element (eSE),
- for said transaction proxy applet (Pxy_A), establishing (E3) a secure channel with the transaction server (TS),
- once the secure channel is established between the transaction server (TS) and the secure element (eSE), requesting (E4) the switching of the Contactless Front-End (CLF) into a secure element reader mode,
- for said transaction proxy applet (Pxy_A), decrypting (E5) encrypted commands received from transaction server (TS) in the secure channel (eSE), forwarding commands in clear through the Contactless Front-End (CLF) to said secured transaction dedicated application (TDA) in the customer device (C_D),
- for said transaction proxy applet (Pxy_A), encrypting (E5) commands received in clear through the Contactless Front-End (CLF) from said secured transaction dedicated application (TDA) in the customer device (C_D), forwarding encrypted commands to transaction server (TS) in the secure channel,
- once the transaction is processed, closing the secure channel and switching (E6) the Contactless Front-End (CLF) back to normal reader mode.

2. Mobile device able to be operated as a low cost secured point-of-sale, hereinafter POS device (POS_D), said POS device (POS_D) having a non-secured operating system (OS), a POS application (POS_A) installed in said non-secured operating system (OS), an embedded secure element (eSE), a transaction proxy applet (Pxy_A) installed in said embedded secure element (eSE) and a Contactless Front-End (CLF) to contactless communicate with a customer mobile device (C_D) having a secured transaction dedicated application (TDA), said POS application (POS_A) being dedicated to initiate a link with a transaction server (TS), forward to the embedded secure element (eSE) requests from said transaction server (TS) for a secure channel to be opened between the transaction server (TS) and said embedded secure element (eSE), said Contactless Front-End (CLF) being able to be switched into a secure element reader mode once a secure channel is established between the transaction server (TS) and the embedded secure element (eSE), said transaction proxy applet (Pxy_A) being able to establish a secure channel with the transaction server (TS), to decrypt encrypted commands received from transaction server (TS) in the secure channel (eSE), to forward commands in clear through the Contactless Front-End (CLF) to said secured transaction dedicated application (TDA) in the customer device (C_D), to encrypt commands received in clear through the Contactless Front-End (CLF) from said secured transaction dedicated application (TDA) in the customer device (C_D), to forward encrypted commands to transaction server (TS) in the secure channel.
